(19) Europäisches Patentamt

European Patent Office

Office européen des brevets

(11) Veröffentlichungsnummer: **0 415 465 A1**

(12) **EUROPÄISCHE PATENTANMELDUNG**

(21) Anmeldenummer: 90201688.0

(22) Anmeldetag: 26.06.90

(51) Int. Cl.⁵: **C01B 17/04, C01B 3/50**

(30) Priorität: 05.08.89 DE 3925985

(43) Veröffentlichungstag der Anmeldung:
**06.03.91 Patentblatt 91/10**

(84) Benannte Vertragsstaaten:
**AT BE DE FR GB IT NL SE**

(71) Anmelder: **METALLGESELLSCHAFT
Aktiengesellschaft
Reuterweg 14
W-6000 Frankfurt am Main(DE)**

(72) Erfinder: **Kriebel, Manfred, Dr.
Tiroler Strasse 61
W-6000 Frankfurt am Main(DE)**
Erfinder: **Fischer, Herbert
Holzmühlenweg 67
W-6304 Lollar(DE)**
Erfinder: **Sander, Ulrich, Dr.
Tanusstrasse 116
W-6382 Friedrichsdorf(DE)**

(54) **Verfahren zum Verbrennen eines H2S-haltigen Gases.**

㊸ Das H₂S-haltige Gas (1) verbrennt man mit Sauerstoff (3) in mindestens einem Brenner (2), der in eine Brennkammer (8) mündet. Dabei entsteht ein H₂S, SO₂, freien Wasserstoff und Elementarschwefel enthaltendes Gasgemisch mit Temperaturen von etwa 900 bis 2000° C. Aus diesem Gasgemisch trennt man bei Temperaturen von etwa 900 bis 2000° C mindestens einen Teil des freien Wasserstoffs ab. Den Wasserstoff kann man z.B. durch Membranen (10) vom Gasgemisch abtrennen.

EP 0 415 465 A1

## VERFAHREN ZUM VERBRENNEN EINES $H_2S$-HALTIGEN GASES

Die Erfindung betrifft ein Verfahren zum Verbrennen eines $H_2S$-haltigen Gases mit Sauerstoff in mindestens einem Brenner, der in eine Brennkammer mündet, zum Erzeugen eines $H_2S$, $SO_2$, freien Wasserstoff und Elementarschwefel enthaltenden Gasgemisches mit Temperaturen von etwa 900 bis 2000°C.

Wenn man $H_2S$-haltiges Gas nach dem Claus-Verfahren umwandeln und Elementarschwefel gewinnen will, verbrennt man das $H_2S$ zunächst teilweise zu $SO_2$ Dies ist seit langem bekannt, Einzelheiten sind z.B. in der deutschen Offenlegungsschrift 34 15 722 und in dem dazu korrespondierenden US-Patent 4 632 819 sowie in der deutschen Offenlegungsschrift 37 35 002 beschrieben. Bei der bekannten Verfahrensweise wird das durch die Verbrennung entstehende Gasgemisch zunächst so weit gekühlt, daß der Elementarschwefel auskondensiert und abgetrennt werden kann. Das verbleibende Gasgemisch wird dann üblicherweise durch eine oder mehrere katalytische Stufen geleitet, um die Entschwefelung weiter zu verbessern.

Der Erfindung liegt die Auf gabe zugrunde, bereits beim ersten Kondensieren des in der Brennkammer entstehenden Gasgemisches einen möglichst hohen Anteil des Schwefels zu entfernen. Erfindungsgemäß gelingt dies dadurch, daß man den freien Wasserstoff bei Temperaturen von etwa 900 bis 2000°C mindestens teilweise aus dem Gasgemisch abtrennt.

Man hat festgestellt, daß im Gasgemisch, das in der Brennkammer gebildet wird, durch Spaltung von $H_2S$ erhebliche Mengen an freiem Wasserstoff und Elementarschwefel enthalten sind. Diese Spaltung, die bei Temperaturen von etwa 900°C bereits mit nennenswertem Anteil erfolgt, wird mit steigender Temperatur immer intensiver. Beim Abkühlen zum Auskondensieren des Elementarschwefels bildet sich jedoch $H_2S$ in erheblichem Maß wieder zurück.

Um die unerwünschte Rückbildung von $H_2 S$ aus dem im heißen Gasgemisch vorhandenen freien Wasserstoff und Elementarschwefel möglichst zu vermeiden, trennt man erfindungsgemäß den freien Wasserstoff bereits bei hohen Temperaturen mindestens teilweise aus dem Gasgemisch ab. Vorzugsweise erfolgt die Abtrennung des freien Wasserstoffs aus dem Gasgemisch im Temperaturbereich von etwa 1000 bis 1700°C. Zweckmäßigerweise trennt man mindestens 20 % des im Gasgemisch enthaltenen freien Wasserstoffs ab, bevor man das Gasgemisch kühlt.

Eine Möglichkeit der Abtrennung des freien Wasserstoffs bei hohen Temperaturen besteht in der Verwendung von Membranen, die man mit dem Gasgemisch in direkten Kontakt bringt. Hierbei diffundiert der Wasserstoff durch die Membran, nicht jedoch die anderen Komponenten des Gasgemisches. Geeignete Membranen bestehen aus einer porösen Schicht, z.B. aus Gamma-Aluminiumoxid oder Korund. Die Porengröße der porösen Schicht liegt zumeist im Bereich von $2 \times 10^{-4}$ bis 0,5 $\mu$m. Die poröse Schicht kann auch noch mit wasserstoffdurchlässigem, keramischem Material, z.B. mit Quarz oder Glas, überzogen sein.

Die erfindungsgemaße Abtrennung des freien Wasserstoffs ist besonders vorteilhaft, wenn man das $H_2S$-haltige Gas nach dem Claus-Verfahren entschwefeln will. Durch die frühzeitige Abtrennung von freiem Wasserstoff wird die aus der Brennkammer kommende, nach Auskondensieren von Elementarschwefel den katalytischen Umwandlungsstufen aufzugebende Gasmenge erheblich reduziert, was das Gesamtverfahren spürbar verbilligt. Vorteilhaft ist auch, daß in der Brennkammer Sauerstoff gespart wird und daß sich das Gleichgewicht bei niedrigeren Temperaturen einstellt.

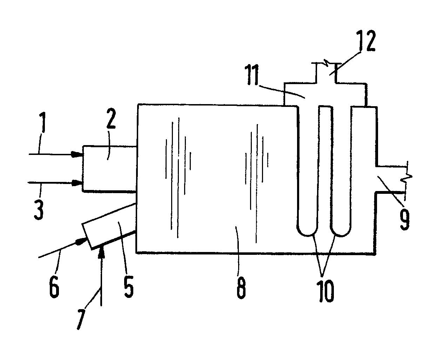

Ausgestaltungsmöglichkeiten des Verfahrens werden mit Hilfe der Zeichnung erläutert. Sie zeigt in schematischer Darstellung eine Anordnung zum Verbrennen von $H_2S$-haltigem Gas.

Das $H_2S$-haltige Gas wird in der Leitung (1) einem Brenner (2) zugeführt, dem man durch die Leitung (3) den für die Verbrennung nötigen Sauerstoff aufgibt. Anstelle von Sauerstoff kann man auch mit Sauerstoff angereicherte Luft oder auch Luft verwenden. Zumeist gehören mehrere Brenner (2) zu einer Brennkammer (8). Falls das $H_2S$-haltige Gas nicht genügend Heizwert besitzt, sorgt man für eine Stützfeuerung in Form eines Hilfsbrenners (5), dem man durch die Leitung (6) gasförmigen Brennstoff und durch die Leitung (7) Luft zuführt. Die Verbrennungsgase strömen zunächst in die Brennkammer (8) und sie verlassen die Brennkammer durch den Auslaß (9) mit Temperaturen von etwa 900 bis 2000°C und zumeist 1000 bis 1700°C.

In der Brennkammer (8) sind mehrere sackförmige Membranen (10) angeordnet, die aus einem porösen Material bestehen, durch das freier Wasserstoff leicht hindurchdiffundiert und welches den relativ hohen Temperaturen standhält. Der Wasserstoff aus dem Inneren der Membranen sammelt sich zunächst in einer Kammer (11) und wird dann durch die Ableitung (12) abgesaugt.

Das an Wasserstoff verarmte Gasgemisch kann zur weiteren Aufarbeitung nach dem Claus-Verfahren durch den Auslaß (9) zunächst einer indirekten Kühlung und Abtrennung von Elementarschwefel zugeführt

2

werden, wie es an sich bekannt ist. Weitere katalytische Umwandlungsstufen können sich anschließen. Der abgetrennte freie Wasserstoff ist ein Wertstoff mit verschiedenen Verwendungsmöglichkeiten, z.B. zum Hydrieren.

Beispiel

In einer der Zeichnung entsprechenden Anordnung ohne Stützfeuerung werden im Labormaßstab 1000 $Nm^3$ eines zu 95 Vol.-% aus $H_2S$ und 5 Vol.-% aus $CO_2$ bestehenden Gases mit technisch reinem Sauerstoff verbrannt. Der Sauerstoff wird so dosiert, daß das die Brennkammer (8) durch den Auslaß (9) verlassende Gasgemisch $H_2S$ und $SO_2$ im Molverhältnis von ziemlich genau 2:1 enthält, wie es für die Erzeugung von Elementarschwefel nach dem Claus-Verfahren vorteilhaft ist. In einem ersten Versuch wurden aus der Brennkammer über eingebaute Membranen (10) 165 $Nm^3$ $H_2$ durch die Ableitung (12) abgesaugt. Die hierbei verwandten Membranen bestanden aus Gamma-Aluminiumoxid, sie hatten die Form einseitig geschlossener Röhrchen mit einer gesamten Oberfläche von 46 $m^2$. Die Druckdifferenz zwischen der Innenseite und der Außenseite der Membranen betrug 0,1 bar.

Zum Vergleich arbeitete man in einem zweiten Versuch ohne Membranen (10) und ohne Wasserstoff-Entzug. Mit Membranen betrug die Temperatur in der Brennkammer (8) in der Nähe des Auslasses (9) 1393 °C und im Versuch ohne Membranen 1566 °C.

In der nachfolgenden Tabelle sind die für die Verbrennung notwendigen Sauerstoffmengen, die Mengen der Gaskomponenten (in $Nm^3$), welche durch den Auslaß (9) strömen, sowie die Gesamtmengen dieses Gases, ebenfalls in $Nm^3$, angegeben. Die Spalte A gehört zu dem Versuch mit Verwendung der Membranen und die Spalte B zum Vergleichsversuch ohne Membranen.

|  | A | B |
|---|---|---|
| Sauerstoffmenge | 320,6 | 347,1 |
| $H_2S$ | 139,4 | 138,1 |
| $SO_2$ | 70,1 | 68,5 |
| $H_2O$ | 523,6 | 588,0 |
| $H_2$ | 122,0 | 223,9 |
| COS | 0,8 | 0,6 |
| CO | 21,8 | 30,2 |
| $CO_2$ | 27,4 | 19,2 |
| $S_2$ | 369,8 | 371,4 |
| gesamte Gasmenge | 1274,9 | 1439,9 |

Die Abtrennung von 165 $Nm^3$ $H_2$ im Versuch mit Membranen führt auch zu einer überraschend hohen Ersparnis an der Verbrennung zuzuführendem Sauerstoff, weil in der Brennkammer weniger $H_2O$ und dafür vor allem zusätzlicher freier Wasserstoff gebildet wird. Das gewünschte Molverhältnis $H_2S$ zu $SO_2$ von etwa 2:1 stellt sich beim Versuch mit Membranen bei niedrigerer Temperatur als beim Versuch ohne Membranen ein.

**Ansprüche**

1. Verfahren zum Verbrennen eines $H_2S$-haltigen Gases mit Sauerstoff in mindestens einem Brenner, der in eine Brennkammer mündet, zum Erzeugen eines $H_2S$, $SO_2$, freien Wasserstoff und Elementarschwefel enthaltenden Gasgemisches mit Temperaturen von etwa 900 bis 2000 °C, dadurch gekennzeichnet, daß man den Wasserstoff bei Temperaturen von etwa 900 bis 2000 °C mindestens teilweise aus dem Gasgemisch abtrennt.
2. Verfahren nach Anspruch 1, dadurch gekennzeichnet, daß man den Wasserstoff durch Membranen vom Gasgemisch abtrennt.
3. Verfahren nach Anspruch 1 oder 2, dadurch gekennzeichnet, daß man mindestens 20 % des im Gasgemisch enthaltenen freien Wasserstoffs abtrennt.
4. Verfahren nach Anspruch 1 oder einem der folgenden, dadurch gekennzeichnet, daß man das Gasgemisch nach Abtrennen von freiem Wasserstoff auf Temperaturen von höchstens 280 °C kühlt, Elementarschwefel kondensiert und mindestens teilweise abtrennt.

5. Verfahren nach Anspruch 4, dadurch gekennzeichnet, daß man das Gasgemisch nach teilweiser Abtrennung von Elementarschwefel nach dem Claus-Verfahren weiter entschwefelt.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 3, no. 7 (C-34)() 24 Januar 1979, <br> & JP-A-53 130291 (KOGYO GIJUTSUIN) 14 November 1978, <br> * das ganze Dokument * <br> — — — | 1-3 | C 01 B 17/04 <br> C 01 B 3/50 |
| A | US-A-4 575 453  (REED) <br> * Figur 1 * <br> — — — | 1,2 | |
| D,A | EP-A-0 160 332  (METALLGESELLSCHAFT) <br> — — — — — | | |

|  |
|---|
| RECHERCHIERTE SACHGEBIETE (Int. Cl.5) |
| C 01 B |

Der vorliegende Recherchenbericht wurde für alle Patentansprüche erstellt

| Recherchenort | Abschlußdatum der Recherche | Prüfer |
|---|---|---|
| Den Haag | 14 Dezember 90 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

----------------------------------------------------------

& : Mitglied der gleichen Patentfamilie, übereinstimmendes Dokument